# EUROPEAN PATENT SPECIFICATION

(11) **EP 4 178 303 B1**
(45) Date of publication and mention of the grant of the patent: **25.11.2026**
(21) Application number: 20943986.8
(22) Date of filing: 06.07.2020
(51) Int. Cl.: H04W 74/00

(54) **RANDOM ACCESS RESOURCE CONFIGURATION METHOD AND APPARATUS, AND STORAGE MEDIUM**
VERFAHREN UND VORRICHTUNG ZUR DIREKTZUGRIFFSRESSOURCENKONFIGURATION SOWIE SPEICHERMEDIUM
PROCÉDÉ ET APPAREIL DE CONFIGURATION DE RESSOURCES D'ACCÈS ALÉATOIRE, ET SUPPORT DE STOCKAGE

(43) Date of publication of application: 10.05.2023
(73) Proprietor: Beijing Xiaomi Mobile Software Co., Ltd., Beijing 100085 (CN)
(72) Inventor: MU, Qin, Beijing 100085 (CN)
(74) Representative: dompatent
(86) International application number: PCT/CN2020/100500
(87) International publication number: WO 2022/006722

(56) References cited:
- EP-A1- 3 297 387
- WO-A1-2014/023026
- WO-A1-2018/120103
- CN-A- 109 076 617
- CN-A- 109 076 617
- US-A1- 2017 280 484
- CMCC: "Discussion on framework of reduced capability NR devices", vol. RAN WG1, no. e-Meeting; 20200525 - 20200605, 16 May 2020 (2020-05-16), XP052345350, Retrieved from the Internet <URL:https://ftp.3gpp.org/tsg_ran/WG1_RL1/TSGR1_101-e/Docs/R1-2003969.zip R1-2003969.docx> [retrieved on 20200516]
- ERICSSON: "Potential UE complexity reduction features for Redcap", 3GPP DRAFT; R1-2003289, vol. RAN WG1, 16 May 2020 (2020-05-16), pages 1 - 33, XP051885083

## Description

### TECHNICAL FIELD

The present disclosure relates to a field of communication technology, and particularly to a method and an apparatus for configuring random access resources, and a storage medium.

### BACKGROUND

Along with the continuous development of internet of things services, such as video monitoring and smart home and wearable devices, industrial sensing monitoring and other services are popular. The services usually require a rate of dozens to 100M, and also have relatively high requirements on time delay, so that it's difficult for machine type communication (MTC) and narrow band internet of things (NB-IoT) to meet the requirements. Therefore, it is necessary to design a new terminal in 5G new radio (NR) to cover middle-end internet of things devices. In current 3GPP standardization, this new type of terminal is called reduced capability UE or simply NR-lite.

Along with the introduction of the NR-lite, capabilities of the terminals are differentiated, an existing random access resource configuration mode may not meet differentiated terminal requirements, and it's difficult for an operator to control flexibly.

US 2017/280484 A1 discloses a communication system in which a communications node allocates resources for potential use by any of a plurality of user communication devices, including first type (e.g. legacy) user communication devices and second type (e.g. machine-type) communication devices. Control data is sent, to the user communication devices, defining communication resources for potential use by any of the user communication devices. The control data includes information identifying a first PRACH resource configuration for a first type user communication device and a second PRACH resource configuration for a second type of device such that the user devices can be distinguished by the PRACH configuration used.

CN 109 076 617 A discloses an MTC system random access method and apparatus, and a storage medium. The method comprises: a base station transmitting a system broadcast message, wherein the broadcast message is used to indicate random access resources of a first capability user and a second capability user; the base station determining, according to a random access channel resource when a user equipment unit transmits a random access preamble, whether a user type of the user equipment unit is the first capability user or the second capability user; the base station transmitting to the user equipment unit a physical downlink channel message comprising a random access response and reconfiguration information; and the base station using a reconfigured physical downlink channel resource indicated by the reconfiguration information to transmit to the user equipment unit a physical downlink channel message comprising a contention resolution message, wherein the reconfigured physical downlink channel resource is determined according to the user type. The disclosure provides a mechanism for transmitting different types of physical downlink channel messages regarding different user capabilities during random access, thereby improving backward compatibility of an independently deployed MTC system.

EP 3 297 387 A1 discloses a method and apparatus for performing a random access procedure in a wireless communication system. A user equipment (UE) determines one random access configuration from a first random access configuration for a normal type of UE and a second random access configuration for a specific type of UE, and transmits a random access preamble based on the second random access configuration to an eNodeB (eNB) if the UE is a specific type of UE. Also, a method and apparatus for establishing, by a UE, a connection in a wireless communication system is provided. The UE transmits a connection request message including bandwidth related information to the eNB.

### SUMMARY

To overcome problems existing in related art, a method and an apparatus for configuring random access resources, and a storage medium are provided the present disclosure.

The invention is set out in the appended set of claims.

The technical solutions provided in the embodiments of the present disclosure may include the following beneficial effects: the first random access resource of the first type terminal is configured, the second random access resource of the second type terminal is configured and at least part of the parameters of the first random access resource are different from those of the second random access resource, so that different random access resources are configured for different terminals, and differentiated terminal requirements are met.

It should be understood that the above general descriptions and following detailed descriptions are only illustrative and descriptive, and may not be a limitation of the present disclosure.

### BRIEF DESCRIPTION OF THE DRAWINGS

The drawings herein are incorporated into the specification and constitute a part of the specification, embodiments in conformity with embodiments of the present disclosure are shown, and the principle of the present disclosure is explained together with the specification.
FIG. 1 is diagram illustrating a communication system architecture.
Fig. 2 illustrates a correspondence between an SSB and a PRACH.
FIG. 3 is a diagram illustrating a protocol specification for a mapping relationship between each SSB and random access resources.
FIG. 4 is a flowchart illustrating a method for configuring random access resources according to an example embodiment of the present disclosure.
FIG. 5 is a block diagram illustrating an apparatus for configuring random access resources.
FIG. 6 is a block diagram illustrating a device configured to configure random access resources according to an example embodiment of the present disclosure.
FIG. 7 is a block diagram illustrating a device configured to configure random access resources.

### DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all implementations consistent with the present disclosure. Rather, they are merely examples of apparatuses and methods consistent with some aspects of the disclosure as detailed in the appended claims.

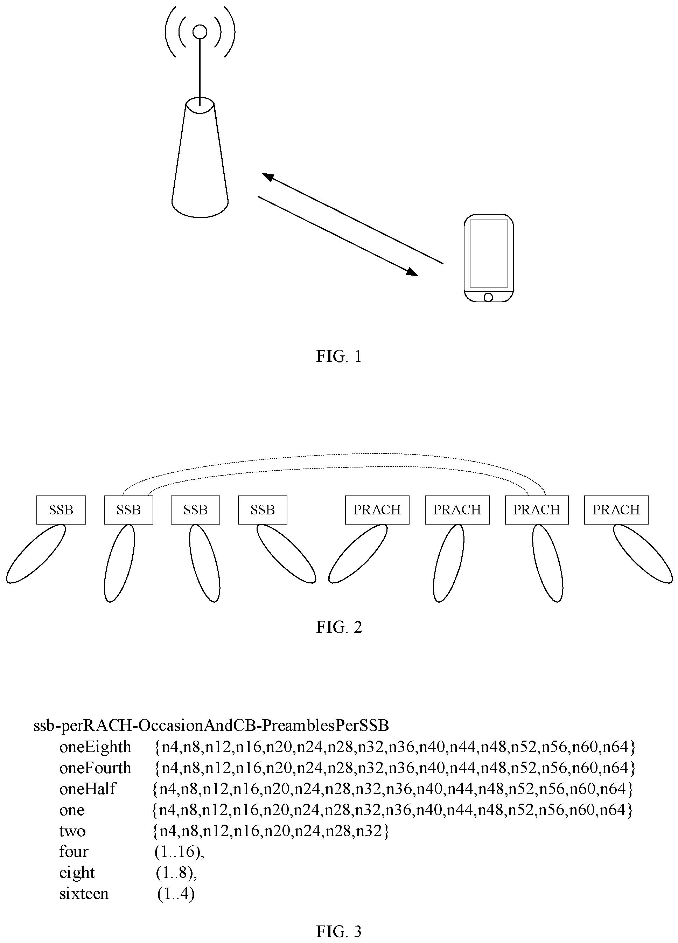

A method for configuring random access resources provided in the embodiment may be applied to a wireless communication system shown in FIG.1. As shown in FIG.1, the wireless communication system includes terminals and network devices. Information is sent and received between a terminal and a network device via wireless resources.

It may be understood that the wireless communication system illustrated in FIG. 1 is merely illustrative. The wireless communication system may further include other network devices. For example, the wireless communication system may further include a core network device, a wireless relay device and a wireless backhaul device, etc., which are not drawn in FIG. 1. The embodiments of the present disclosure do not limit the number of the network devices and the number of the terminals included in the wireless communication system.

It can be further understood that the wireless communication system according to the embodiments of the present disclosure is a network providing a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), carrier sense multiple access with collision avoidance (CSMA/CA). The network may be a 2G (generation) network, a 3G network, a 4G network or a future evolution network, such as a 5G network (also called new radio NR network) according to a capacity, rate, time delay and other factors of the networks. For ease of description, the wireless communication network sometimes is simply referred to as a network in the present disclosure.

Further, the network device involved in the present disclosure may also be referred to as a wireless access network device. The wireless access network device may be a base station, an evolved node B (base station), a home base station, an access point (AP) in a wireless fidelity (WIFI) system, a wireless relay node, a wireless backhaul node, a transmission point (TP) or a transmission and reception point (TRP), etc. It may also be a gNB in the NR system. Alternatively, it may also be a component or part of the device that constitutes the base station. When it comes to a vehicle to everything (V2X) communication system, the network device may also be a vehicle-mounted device. It should be understood that specific technologies and specific device forms adopted by the network devices are not limited in the embodiments of the present disclosure.

Furthermore, the terminal involved in the present disclosure may also be referred to as a terminal device, a user equipment (UE), a mobile station (MS), a mobile terminal (MT), etc., and is a device for providing voice and/or data connectivity to a user. For example, the terminal may be a handheld device with a wireless connection function, a vehicle-mounted device, etc. At present, some examples of terminals are mobile phones, pocket personal computers (PPC), handheld computers, personal digital assistants (PDA), laptops, tablets, wearable devices, or vehicle-mounted devices, etc. In addition, when it comes to the vehicle to everything (V2X) communication system, the terminal devices may also be vehicle-mounted devices. It should be understood that the specific technologies and the specific device forms adopted by the terminals are not limited in the embodiments of the present disclosure.

The terminal involved in the embodiments of the present disclosure may be understood as a new type terminal designed in 5G NR: a reduced capability UE or simply a NR-lite. In the embodiments of the present disclosure, the new type terminal is referred to as a 5G NR-lite.

Similar to the internet of thing (IoT) devices in long term evolution (LTE), the 5G NR-lite usually needs to meet the following requirements:
- low cost, low complexity;
- coverage enhancement to some extent;
- power saving.

Since a current NR system is designed for high-end terminals with high-speed low-delay and etc., the current design may not meet the above requirements of the NR-lite. Therefore, the current NR system needs to be transformed to meet the requirements of the NR-lite. For example, in order to meet the requirements of low cost, low complexity and etc., radio frequency (RF) bandwidth of NR-IoT may be limited. For example, the radio frequency (RF) bandwidth is limited to 5MHz or 10MHz, or a size of a NR-lite cache (buffer) is limited, and then a size of each received transmission block is limited. For the power saving, a possible optimization may be simplifying a communication process and reducing a number of times the NR-lite terminal detects a downlink control channel, etc.

In the related art, a unified random access resource configuration mode is adopted for all types of the terminals. For example, in the NR system, an access configuration of the terminal is performed by a random access channel RACH-ConfigCommon information element. A first part of the RACH-ConfigCommon information element configuration is used to configure a total amount of the random access resources for a cell. The configured random access resources include a time domain resource, a frequency domain resource, and a random access preamble for random access. A second part of the RACH-ConfigCommon information element configuration is used to configure a mapping relationship between a SS/PBCH block (SSB) and the random access resources. The terminal determines a corresponding random resource subset corresponding to the SSB meeting a requirement in the measurement result according to the mapping relationship between the SSB and the random access resources.

For the first part of the RACH-ConfigCommon information element configuration, the random access resource configuration used within the cell includes a general random access configuration (rach-ConfigGeneric). The rach-ConfigGeneric mainly includes a random access index configuration (prach-ConfigurationIndex). The prach-ConfigurationIndex is configured to configure a RACH occasion (RO). The number of frequency domain resources is determined by msg1-FDM, and a starting position of the frequency domain is determined by msg. 1-FrequencyStart.

**In** a traditional LTE system, only one synchronization channel and one broadcast channel are transmitted in one period. Since the multi-beam is introduced in the NR, the SSB transmission is also based on the multi-beam transmission. That is, in one period, the SSB is sent with multiple beams. The SSBs transmitted with different beams in one period is called a SSB burst. Each SSB in the SSB burst corresponds to a different subset of random access resources. As shown in FIG. 2, there is a correspondence between the SSBs and the PRACHs. The mapping relationship between each SSB in the SSB burst and the random access resources is defined in a protocol. A protocol specification of the mapping relationship between each SSB in the SSB Burst and the random access resources may be shown in FIG. 3.

As shown in FIG. 3, ssb-per RACH-Occasion is configured to configure the correspondence between the SSB and the RO, and represents the number of SSBs corresponding to one RACH occasion. A value range of the ssb-per RACH-Occasion is one Eighth~sixteen. Different values of the ssb-per RACH-Occasion represent different mapping relationships between the SSB and the RO. When ssb-per RACH-occasion > 1, it indicates that a plurality of SSBs correspond to one RACH occasion. Further, referring to FIG. 2, the value of each ssb-per RACH-Occasion corresponds to a CB-PreamblesPerSSB set. The CB-PreamblesPerSSB is configured to configure the number of contention-based random access preambles which may be used by each SSB in one RO. Different values of the CB-PreamblesPerSSB represent the number of different contention-based preambles used by the SS/PBCH block.

Along with the introduction of the NR-lite, capabilities of the terminals are differentiated, an existing random access resource configuration mode may not meet differentiated terminal requirements, and a flexible control of an operator is not facilitated.

The method for configuring random access resources is provided by the embodiment of the present disclosure, different random access resources are configured for different types of the terminals, and differentiated terminal requirements are met.

For convenience of description, any two different types of the terminals are referred to as a first type terminal and a second type terminal in the embodiments of the present disclosure. The random access resource configured for the first type terminal is referred to as a first random access resource. The random access resource configured for the second type terminal is referred to as a second random access resource.

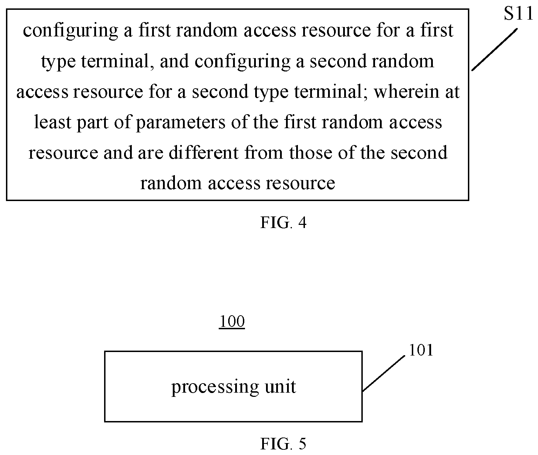

FIG. 4 is a flowchart illustrating a method for configuring random access resources according to an example embodiment. As shown in FIG. 4, the method for configuring random access resources is applied to a network device, and includes the following steps.

At S11, a first random access resource is configured for a first type terminal, and a second random access resource is configured for a second type terminal.

According to the embodiment of the present disclosure, at least part of parameters of the first random access resource are different from those of the second random access resource, so that different random access resources are configured for different types of the terminals, and differentiated terminal requirements are met.

**In** the embodiments of the present disclosure, the first type terminal and the second type terminal may have different capabilities. For example, the capabilities of a terminal may be a transceiving bandwidth, a number of transceiving antennas, a maximum number of bits of a transmission block and a processing time delay, etc. The capabilities of the terminals may be different in one or more of the transceiving bandwidth, the number of transceiving antennas, the maximum number of bits of the transmission block, or the processing time delay. In one embodiment, the first type terminal may be an NR-lite, and the second type terminal may be an NR terminal.

The embodiments of different types of the terminals configured with different random access resources will be described in combination with actual applications in the embodiment of the present disclosure.

**In** one embodiment, at least part of the parameters of the first random access resource are different from the second random access resource in the embodiments of the present disclosure in which the at least part of the parameters include at least one of a time domain resource parameter, a frequency domain resource parameter, or a code domain resource parameter. In some embodiments, the code domain resource parameter may be a random access preamble.

**In** one embodiment, different random access resources are configured for different types of the terminals in the embodiments of the present disclosure. For example, the configured random access resources are different, which may be that one or more of a time domain resource, a frequency domain resource, and a random access preamble for random access are different.

In one embodiment, the first random access resource configured for the first type terminal and the second random access resource configured for the second type terminal are different, which may be that one or more of the time domain resource of the first random access resource, the time domain resource of the second random access resource, the frequency domain resource of the first random access resource, the frequency domain resource of the second random access resource, the preamble of the first random access resource and the preamble of the second random access resource are different.

In one embodiment, the first random access resource configured for the first type terminal is different from the second random access resource configured for the second type terminal, which may be that the time domain resource of the first random access resource is the same as the time domain resource of the second random access resource, the frequency domain resource of the first random access resource is the same as the frequency domain resource of the second random access resource, and the preamble of the first random access resource is different from the preamble of the second random access resource.

In the embodiment of the present disclosure, the first random access resource configured for the first type terminal is different from the second random access resource configured for the second type terminal, which may be that the preamble of the first random access resource is different from the preamble of the second random access resource. The preamble of the first random access resource is different from the preamble of the second random access resource, which may be that that random access configuration parameters corresponding to the SSB of the first random access resource are different from the random access configuration parameters corresponding to the SSB of the second random access resource.

The random access configuration parameters corresponding to the SSB of the first random access resource being different from the random access configuration parameters corresponding to the SSB of the second random access resource may include the following modes.

In one mode, a random access channel RACH occasion corresponding to the SSB of the first random access resource is the same as the RACH occasion corresponding to the SSB of the second random access resource, and a contention-based preamble used by the SSB of the first random access resource is different from the contention-based preamble used by the SSB of the second random access resource.

In another mode, the RACH occasion corresponding to the SSB of the first random access resource is different from the RACH occasion corresponding to the SSB of the second random access resource, and the contention-based preamble used by the SSB of the first random access resource is different from the contention-based preamble used by the SSB of the second random access resource.

In the embodiment of the present disclosure, the contention-based preamble used by the SSB of the first random access resource is different from the contention-based preamble used by the SSB of the second random access resource, which means a preamble index set used by the SSB of the first random access resource is different from that of the SSB of the second random access resource, which further means the preamble index set used by the SSB of the first random access resource does not overlap with the preamble index set used by the SSB of the second random access resource.

In one example, the first type terminal is the NR-lite, and the second type terminal is a common NR terminal. The NR-lite terminal shares same time-frequency configuration parameters with the common NR terminal (the time domain resource is the same and the frequency domain resource is the same), but the NR-lite terminal and the common NR terminal use different preambles. Different preambles are used for the NR-lite terminal and the common NR terminal, which means a parameter value of ssb-perRACH-OccasionAndCB-PreamblesPerSSB of the NR-lite terminal is different from that of the common NR terminal. The parameter values of the ssb-perRACH-OccasionAndCB-PreamblesPerSSB being different includes the following two cases.

In case 1, the values of ssb-perRACH-Occasion are still same, but the contention-based preamble used by each SSB is different, that is, the values of CB-PreamblesPerSSB are different.

In case 2, the values of the ssb-perRACH-Occasion are different, and the contention-based preamble used by each SSB is different, that is, the values of the CB-PreamblesPerSSB are different.

The contention-based preamble used by the NR-lite is different from that used by the common NR terminal, which may be that the preamble index set used by the NR-lite is different from that used by the common NR terminal. For example, when the value of the CB-PreamblesPerSSB of the common NR terminal is x, the value of the CB-PreamblesPerSSB of the NR-lite terminal is y. The preamble index set used by the common NR terminal is preamble# 1 ~ preamble#x. The preamble set used by the NR-lite is {preamble#x +1, preamble#x + y} .

In the embodiment of the present disclosure, the first random access resource configured for the first type terminal is different from the second random access resource configured for the second type terminal, which may be that the time domain resource of the first random access resource is the same as the time domain resource of the second random access resource, the frequency domain resource of the first random access resource is different from the frequency domain resource of the second random access resource, and the preamble of the first random access resource is the same as the preamble of the second random access resource.

**In** the embodiment of the present disclosure, the first random access resource configured for the first type terminal is different from the second random access resource configured for the second type terminal, which may also be that the time domain resource of the first random access resource is different from the time domain resource of the second random access resource, the frequency domain resource of the first random access resource is the same as the frequency domain resource of the second random access resource, and the preamble of the first random access resource is the same as the preamble of the second random access resource.

**In** the embodiment of the present disclosure, the first random access resource configured for the first type terminal is different from the second random access resource configured for the second type terminal, which may also be that the time domain resource of the first random access resource is different from the time domain resource of the second random access resource, the frequency domain resource of the first random access resource is different from the frequency domain resource of the second random access resource, and the preamble of the first random access resource is the same as the preamble of the second random access resource.

**In** the embodiment of the present disclosure, the first random access resource configured for the first type terminal is different from the second random access resource configured for the second type terminal, which may be that different time domain configuration parameters (different time domain resources and/or different frequency domain resources) are used by the first type terminal and the second type terminal, but the same preamble is used.

In one embodiment, the preamble of the first random access resource is the same as the preamble of the second random access resource, which may be that the random access configuration parameters corresponding to the SSB of the first random access resource are the same as the random access configuration parameters corresponding to the SSB of the second random access resource. For example, the ssb-perRACH-OccasionAndCB-PreamblesPerSSB corresponding to the SSB of the first random access resource is the same as the ssb-perRACH-OccasionAndCB-PreamblesPerSSB corresponding to the SSB of the second random access resource.

**In** one embodiment, the random access configuration parameters corresponding to the SSB of the first random access resource being the same as the random access configuration parameters corresponding to the SSB of the second random access resource includes:

The RACH occasion corresponding to the SSB of the first random access resource is the same as the RACH occasion corresponding to the SSB of the second random access resource, and the contention-based preamble used by the SSB of the first random access resource is the same as the contention-based preamble used by the SSB of the second random access resource.

In one example, the first type terminal is the NR-lite, and the second type terminal is the common NR terminal.

For the NR-lite and the NR terminal, different time-frequency resource sets are used, but the same ssb-perRACH-OccasionAndCB-PreamblesPerSSB parameter is used. The NR-lite and the NR terminal using different time-frequency resource sets may include the following case.

Case 1: the same time domain configuration is used, but different frequency domain configurations are used.

Case 2: the same time domain configuration is used, but different frequency domain configurations are used.

Case 3: different time domain configurations are used, and different frequency domain configurations are used.

In the embodiment of the present disclosure, the first random access resource configured for the first type terminal is different from the second random access resource configured for the second type terminal, which may be that the time domain resource of the first random access resource is different from the time domain resource of the second random access resource, the frequency domain resource of the first random access resource is different from the frequency domain resource of the second random access resource, and the preamble of the first random access resource is different from the preamble of the second random access resource.

The preamble of the first random access resource is different from the preamble of the second random access resource, which may be that the random access configuration parameters corresponding to the SSB of the first random access resource are different from the random access configuration parameters corresponding to the SSB of the second random access resource. For example, the ssb-perRACH-OccasionAndCB-PreamblesPerSSB corresponding to the SSB of the first random access resource is different from the ssb-perRACH-OccasionAndCB-PreamblesPerSSB corresponding to the SSB of the second random access resource.

The ssb-perRACH-OccasionAndCB-PreamblesPerSSB corresponding to the SSB of the first random access resource is different from the ssb-perRACH-OccasionAndCB-PreamblesPerSSB corresponding to the SSB of the second random access resource, which may be that the values of the ssb-perRACH-Occasion are same, but the values of CB-PreamblesPerSSB are different; or the values of ssb-perRACH-Occasion are different, and the values of CB-PreamblesPerSSB are also different.

**In** the embodiment of the present disclosure, different random access resources are configured for the first random access resource and the second random access resource. For example, different time domain resources, and/or different frequency domain resources, and/or different preambles are configured for different types of the terminals. Thus the differentiated requirements of different types of the terminals are met.

**In** the embodiment of the present disclosure, the same IE or different IEs may be used for different random access resources.

**In** one embodiment, each of the different random access resources is represented by an independent IE respectively. For example, the first random access resource corresponds to the first IE, the second random access resource corresponds to the second IE, and the first IE is different from the second IE.

**In** one embodiment, when the first random access resource and the second random access resource share the same time-frequency resource, but use different preambles, independent IEs may be defined for the first random access resource and the second random access resource. For example, for the IE of the ssb-perRACH-OccasionAndCB-PreamblesPerSSB, a set of IE parameters may be defined separately for the NR-lite and a set of IE parameters may be defined separately for the common NR terminal.

**In** one embodiment, when the first random access resource and the second random access resource use different time-frequency resources, but use the same preamble, independent IEs may be defined for the first random access resource and the second random access resource. For example, for the IE of the rach-ConfigGeneric, a set of IE parameters may be defined separately for the NR-lite and a set of IE parameters may be defined separately for the common NR terminal.

**In** one embodiment, when the first random access resource and the second random access resource use different time-frequency resources, and use different preambles, independent IEs may be defined for the first random access resource and the second random access resource. For example, for the IE of the RACH-ConfigCommon information element, a set of IE parameters may be defined separately for the NR-lite and a set of IE parameters may be defined separately for the common NR terminal.

**In** the embodiment of the present disclosure, different random access resources may be represented by different information domains of the same IE. In one embodiment, the first random access resource is carried in a first information domain of a specified IE, the second random access resource is carried in a second information domain of the specified IE, and the first information domain is different from the second information domain.

**In** one embodiment, when the first random access resource and the second random access resource share the same time-frequency resource but use different preambles, the first random access resource and the second random access resource share the same IE but are indicated in different information domains. For example, for the IE of the ssb-perRACH-OccasionAndCB-PreamblesPerSSB, an additional definition may be defined in the IE used by the common NR terminal to indicate the information domain of the IE of the NR-lite.

**In** another embodiment, when the first random access resource and the second random access resource use different time-frequency resources, but use the same preamble, the first random access resource and the second random access resource share the same IE but are indicated in different information domains. For example, for the IE of the rach-ConfigGeneric, an additional definition may be defined in the IE used by the common NR terminal to indicate the information domain of the IE of the NR-lite.

**In** one embodiment, when the first random access resource and the second random access resource use different time-frequency resources and use different preambles, the first random access resource and the second random access resource share the same IE but are indicated in different information domain. For example, for the IE of the RACH-ConfigCommon information element, an additional definition may be defined in the IE used by the common NR terminal to indicate the information domain of the IE of the NR-lite.

According to the method for configuring random access resources provided in the embodiment of the present disclosure, different random access mapping modes are defined for different types of the terminals. For example, for the NR-lite, an additional random access mapping mode may be defined.

**In** the embodiments of the present disclosure, the network device configures different random access resources for different types of the terminals. Different types of the terminals determine the random access resources matching their own terminal types when determining the random access resources.

It can be understood that the method for configuring random access resources provided in the embodiment of the present disclosure is suitable for realizing a process of determining random access resources in an interaction between the network device and the terminal. The process of determining random access resources in the interaction between the network device and the terminal will not be described in detail in the embodiments of the present disclosure.

It should be noted that those skilled in the art may understand that various embodiments involved in the embodiments of the present disclosure may be used in conjunction with the aforementioned embodiments, and may also be used independently. Whether the embodiments are used alone or in cooperation with the aforementioned embodiments, the implementation principle is similar. In the embodiments of the present disclosure, some embodiments are described in a way that the embodiments are used together. Those skilled in the art may understand that such an example is not limited to the embodiments of the present disclosure.

Based on the same concept, an apparatus for configuring random access resources is further provided in the embodiment of the present disclosure.

It can be understood that in order to realize the aforementioned functions, the apparatus for configuring random access resources provided in the embodiment of the present disclosure includes a hardware structure and/or a software module for executing each function. Combined with the units and algorithm steps of the examples disclosed in the embodiments of the present disclosure, the embodiments of the present disclosure may be implemented in the form of hardware or a combination of hardware and computer software. Whether a function is executed by hardware or computer software driven by hardware depends on the specific application and design constraints of the technical solution. Those skilled in the art may adopt different methods for each specific application to implement the described functions, but such implementation should not be considered as beyond the scope of the technical solutions of embodiments of the present disclosure.

FIG. 5 is a block diagram illustrating an apparatus for configuring random access resources according to an example embodiment. Referring to FIG. 5, the apparatus 100 for configuring random access resources includes a processing unit 101.

The processing unit 101 is configured to configure a first random access resource for a first type terminal, and configure a second random access resource for a second type terminal. At least part parameters of first random access resource are different from those of the second random access resource.

**In** one embodiment, at least part of the parameters of the first random access resource and the second random access resource are different in the embodiments of the present disclosure. At least one of a time domain resource parameter, a frequency domain resource parameter, or a code domain resource parameter of the first random access resource is different from that of the second random access resource. In some embodiments, the code domain resource parameter may be a random access preamble.

**In** one embodiment, one or more parameters of a time domain resource, a frequency domain resource, and a preamble of the first random access resource are different from those of the second random access resource.

**In** one embodiment, the time domain resource of the first random access resource is the same as the time domain resource of the second random access resource, the frequency domain resource of the first random access resource is the same as the frequency domain resource of the second random access resource, and the preamble of the first random access resource is different from the preamble of the second random access resource.

**In** one embodiment, the preamble of the first random access resource being different from the preamble of the second random access resource includes:

Random access configuration parameters corresponding to a SSB of the first random access resource is different from the random access configuration parameters corresponding to the SSB of the second random access resource.

**In** one embodiment, the random access configuration parameters corresponding to the SSB of the first random access resource being different from the random access configuration parameters corresponding to the SSB of the second random access resource includes:

A RACH occasion corresponding to the SSB of the first random access resource is the same as the RACH occasion corresponding to the SSB of the second random access resource, and a contention-based preamble used by the SSB of the first random access resource is different from the contention-based preamble used by the SSB of the second random access resource.

**In** one embodiment, the random access configuration parameters corresponding to the SSB of the first random access resource being different from the random access configuration parameters corresponding to the SSB of the second random access resource includes:

The RACH occasion corresponding to the SSB of the first random access resource is different from the RACH occasion corresponding to the SSB of the second random access resource, and the contention-based preamble used by the SSB of the first random access resource is different from the contention-based preamble used by the SSB of the second random access resource.

**In** one embodiment, the time domain resource of the first random access resource is the same as the time domain resource of the second random access resource, the frequency domain resource of the first random access resource is different from the frequency domain resource of the second random access resource, and the preamble of the first random access resource is the same as the preamble of the second random access resource.

In one embodiment, the time domain resource of the first random access resource is different from the time domain resource of the second random access resource, the frequency domain resource of the first random access resource is the same as the frequency domain resource of the second random access resource, and the preamble of the first random access resource is the same as the preamble of the second random access resource.

In one embodiment, the time domain resource of the first random access resource is different from the time domain resource of the second random access resource, the frequency domain resource of the first random access resource is different from the frequency domain resource of the second random access resource, and the preamble of the first random access resource is the same as the preamble of the second random access resource.

In one embodiment, the preamble of the first random access resource being the same as the preamble of the second random access resource includes:

the random access configuration parameters corresponding to the SSB of the first random access resource is the same as the random access configuration parameters corresponding to the SSB of the second random access resource.

In one embodiment, the random access configuration parameters corresponding to the SSB of the first random access resource being the same as the random access configuration parameters corresponding to the SSB of the second random access resource includes:

The RACH occasion corresponding to the SSB of the first random access resource is the same as the random access occasion corresponding to the SSB of the second random access resource, and the contention-based preamble used by the SSB of the first random access resource is the same as the contention-based preamble used by the SSB of the second random access resource.

In one embodiment, the time domain resource of the first random access resource is different from the time domain resource of the second random access resource, the frequency domain resource of the first random access resource is different from the frequency domain resource of the second random access resource, and the preamble of the first random access resource is different from the preamble of random access resource.

**In** one embodiment, the first random access resource corresponds to a first information element, and the second random access resource corresponds to a second information element, and the first information element is different from the second information element.

**In** one embodiment, the first random access resource is carried in a first information domain of a specified information element, the second random access resource is carried in a second information domain of the specified information element, and first information domain is different from the second information domain.

With regard to the apparatus in the above embodiments, the specific way in which each module performs the operation has been described in detail in the embodiments of the method and will not be elaborated here.

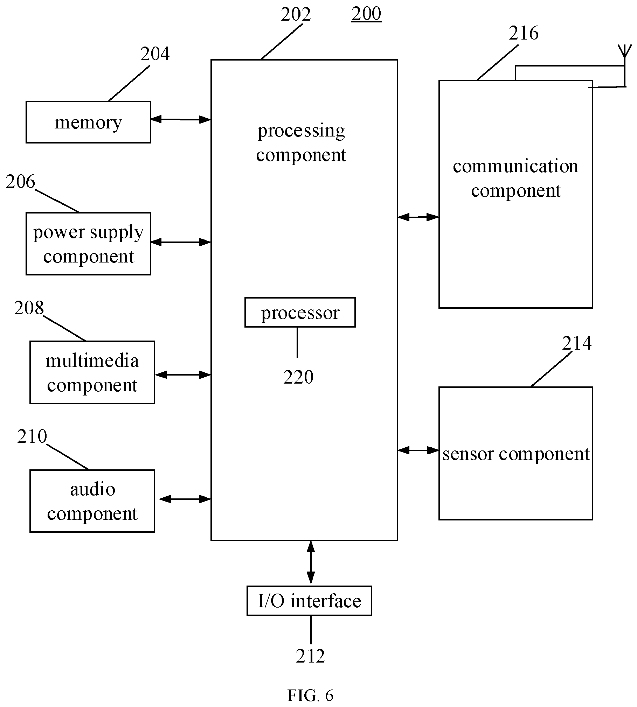

FIG. 6 is a block diagram illustrating a device 200 configured to configure random access resources according to an example embodiment. For example, the device 200 may be a mobile phone, a computer, a digital broadcasting terminal, a messaging device, a game console, a tablet device, a medical equipment, a fitness equipment, a personal digital assistant, etc.

Referring to Fig. 6, the device 200 may include one or more components: a processing component 202, a memory 204, a power supply component 206, a multimedia component 208, an audio component 210, an input/output (I/O) interface 212, a sensor component 214, and a communication component 216.

The processing component 202 generally controls the whole operation of the device 200, such as the operations related to display, phone call, data communication, camera operation and recording operation. The processing component 202 may include one or more processors 220 to perform instructions, to complete all or part of steps of the above method. In addition, the processing component 202 may include one or more modules for the convenience of interaction between the processing component 202 and other components. For example, the processing component 202 may include a multimedia module for the convenience of interaction between the multimedia component 208 and the processing component 202.

The memory 204 is configured to store all types of data to support the operation of the device 200. Examples of the data include the instructions of any applications or methods operated on the device 200, contact data, phone book data, messages, pictures, videos, etc. The memory 204 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 206 may provide power supply for all components of the device 200. The power supply component 206 may include power supply management system, one or more power supplies, and other units related to generating, managing and distributing power for the device 200.

The multimedia component 208 includes an output interface screen provided between the device 200 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touching, sliding and gestures on the touch panel. The touch sensor may not only sense the boundary of touch or slide action, but also detect the duration and pressure related to the touching or sliding operation. In some embodiments, the multimedia component 208 includes a front camera and/or a rear camera. When the device 200 is in operation mode, such as shooting mode or video mode, the front camera or the rear camera may receive the external multimedia data. Each front camera and rear camera may be a fixed optical lens system or an optical lens system with focal length and optical zoom capacity.

The audio component 210 is configured as an output and/or input signal. For example, the audio component 210 includes a microphone (MIC). When the device 200 is in operation mode, such as call mode, record mode, and speech recognition mode, the microphone is configured to receive the external audio signals. The audio signals received may be further stored in the memory 204 or sent via the communication component 216. In some embodiments, the audio component 210 further includes a speaker configured to output an audio signal.

The I/O interface 212 provides an interface for the processing component 202 and the peripheral interface module, and the peripheral interface module may be a keyboard, a click wheel, a button, etc. The buttons may include but not limited to a home button, a volume button, a start button and a lock button.

The sensor component 214 includes one or more sensors, configured to provide various aspects of status assessment for the device 200. For example, the sensor component 214 may detect the on/off state of the device 200 and the relative positioning of the component. For example, the component is a display and a keypad of the device 200. The sensor component 214 may further detect the location change of the device 200 or one component of the device 200, the presence or absence of contact between the user and the device 200, the orientation or acceleration/deceleration of the device 200, and the temperature change of the device 200. The sensor component 214 may include a proximity sensor, which is configured to detect the existence of the objects nearby without any physical contact. The sensor component 214 may further include a light sensor such as CMOS or CCD image sensor, which is configured to use in imaging applications. In some embodiments, the sensor component 214 may further include an acceleration transducer, a gyroscope sensor, a magnetic sensor, a pressure sensor or a temperature sensor.

The communication component 216 is configured for the convenience of wire or wireless communication between the device 200 and other devices. The device 200 may access wireless networks based on communication standard, such as WiFi, 2G or 3G, or their combination. In an exemplary embodiment, the communication component 216 receives broadcast signals or broadcast-related information from an external broadcast management system via a broadcast channel. In an exemplary embodiment, the communication component 216 further includes a near field communication (NFC) module to facilitate short-range communication. For example, an NFC module may be implemented based on radio frequency identification (RFID) technology, infrared data association (IRDA) technology, ultra-wideband (UWB) technology, bluetooth (BT) technology and other technologies.

In an exemplary embodiment, the device 200 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an example embodiment, a non-temporary computer readable storage medium is further provided which includes instructions, such as the memory 204 including instructions. The instructions may be executed by the processor 220 of the device 200 to complete the above methods. For example, the non-transitory computer readable storage medium may be a ROM, a random access memory (RAM), a CD-ROM, a magnetic tape, a floppy disk, an optical data storage device, etc.

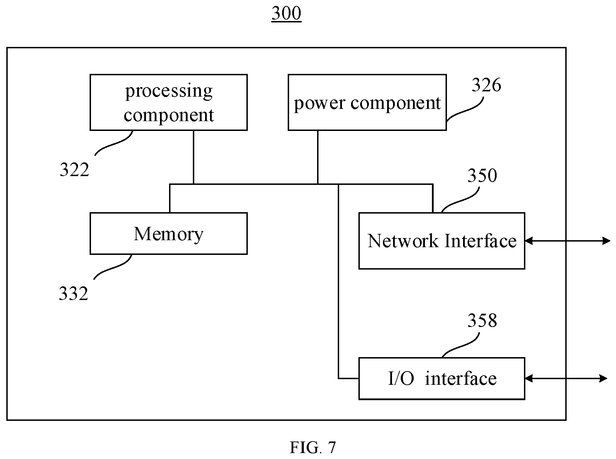

FIG. 7 is a block diagram illustrating a device 300 configured to configure random access resources according to an example embodiment. For example, the apparatus 300 may be provided as a server. Referring to FIG. 7, the device 300 includes a processing component 322, which further includes one or more processors, and memory resources represented by the memory 332, which are configured to store instructions executed by the processing component 322, for example, an application. The applications stored in the memory 332 may include one or more modules each of which corresponds to a set of instructions. In addition, the processing component 322 is configured to execute instructions, to execute the above method.

The device 300 may further include one power supply component 326 configured to execute power management of the device 300, and one wired or wireless network interface 350 is configured to connect the device 300 to a network, and one input/output (I/O) interface 358. The device 300 may operate an operating system stored in the memory 332, for example, Windows ServerTM, Mac OS XTM, UnixTM, LinuxTM, FreeBSDTM.

In an example embodiment, a non-temporary computer readable storage medium is further provided which includes instructions, such as the memory 332 including instructions. The instructions may be executed by the processing component 322 of the device 300 to complete the above methods. For example, the non-transitory computer readable storage medium may be a ROM, a random access memory (RAM), a CD-ROM, a magnetic tape, a floppy disk, an optical data storage device, etc.

It is further understood that the term "plurality" in the disclosure refers to two or more, and other quantifiers refer to two or more similarly. The term "and/or" describes the relation of associated objects, which indicates three relations. For example, A and/or B indicates three relations, namely, A exists alone, A and B exist at the same time, and B exists alone. The character "/" generally indicates that the associated objects before and after is an "or" relation. The singular forms "a", "said" and "the" are also intended to include a plural form, unless the context clearly indicates otherwise.

It should be understood that although the terms "first" and "second" may be used in this disclosure to describe various information, the information should not be limited to these terms. These terms are only used to distinguish the same type of information from each other, and do not indicate a particular order or level of importance. In fact, the terms "first" and "second" may be used interchangeably. For example, without departing from the scope of this disclosure, the first information may also be referred to as the second information, and the second information may be referred to as the first information.

It is further understood that although the operations are depicted in the accompanying drawings in a particular order, it should not be interpreted as that these operations are required to be performed in the specific order shown or in serial order, or all the operations shown are required to be executed to obtain the desired result. In a given environment, multitasking and parallel processing may be advantageous.

## Claims

1. A method for configuring random access resources, performed by a network device, comprising:
configuring (S11) a first random access resource for a first type terminal, and configuring a second random access resource for a second type terminal; and
sending the first random access resource and the second random access resource to the first type terminal and second type terminal;
wherein at least part parameters of the first random access resource are different from parameters of the second random access resource;
**characterized by**:
random access configuration parameters corresponding to a synchronization signal/physical broadcast channel block, SS/PBCH block, of the first random access resource being different from the random access configuration parameters corresponding to the SS/PBCH block of the second random access resource.

2. The method of claim 1, wherein one or more of a time domain resource, a frequency domain resource, and a random access preamble of a random access resource of the first random access resource are different from the time domain resource, the frequency domain resource, and the random access preamble of a random access resource of the second random access resource.

3. The method of claim 2, wherein the time domain resource of the first random access resource is the same as the time domain resource of the second random access resource, and the frequency domain resource of the first random access resource is the same as the frequency domain resource of the second random access resource.

4. The method of claim 1, wherein random access configuration parameters corresponding to a SS/PBCH block of the first random access resource being different from the random access configuration parameters corresponding to the SS/PBCH block of the second random access resource comprises:
a random access channel RACH occasion corresponding to the SS/PBCH block of the first random access resource being the same as the RACH occasion corresponding to the SS/PBCH block of the second random access resource, and
a contention-based preamble used by the SS/PBCH block of the first random access resource being different from the contention-based preamble used by the SS/PBCH block of the second random access resource.

5. The method of claim 1, wherein random access configuration parameters corresponding to a SS/PBCH block of the first random access resource being different from the random access configuration parameters corresponding to the SS/PBCH block of the second random access resource comprises:
a RACH occasion corresponding to the SS/PBCH block of the first random access resource being different from the RACH occasion corresponding to the SS/PBCH block of the second random access resource, and
a contention-based preamble used by the SS/PBCH block of the first random access resource being different from the contention-based preamble used by the SS/PBCH block of the second random access resource.

6. The method of claim 2, wherein the time domain resource of the first random access resource is different from the time domain resource of the second random access resource, the frequency domain resource of the first random access resource is different from the frequency domain resource of the second random access resource, and the random access preamble of the first random access resource is different from the random access preamble of the second random access resource.

7. The method of any one of claims 1 to 6, wherein the first random access resource corresponds to a first information element, the second random access resource corresponds to a second information element, and the first information element is different from the second information element.

8. An apparatus for configuring random access resources, comprising:
a processor (220);
a memory (204) configured to store instructions executable by the processor (220);
wherein the processor (220) is configured to execute the method for configuring random access resources of any one of claims 1 to 7.

9. A non-transitory computer readable storage medium, wherein an instruction stored in the storage medium is executed by a processor, the processor executes the method for configuring random access resources of any one of claims 1 to 7.

## Patentansprüche

1. Verfahren zur Konfiguration von Direktzugriffsressourcen, das von einer Netzwerkvorrichtung durchgeführt wird, umfassend:
Konfigurieren (S11) einer ersten Direktzugriffsressource für ein Endgerät eines ersten Typs und Konfigurieren einer zweiten Direktzugriffsressource für ein Endgerät eines zweiten Typs; und
Senden der ersten Direktzugriffsressource und der zweiten Direktzugriffsressource an das Endgerät des ersten Typs und das Endgerät des zweiten Typs;
wobei sich zumindest einige Parameter der ersten Direktzugriffsressource von den Parametern der zweiten Direktzugriffsressource unterscheiden;
**dadurch gekennzeichnet,**
**dass** sich Direktzugriffskonfigurationsparameter, die einem Synchronisationssignal-/physikalischen Broadcast-Kanal-Block, SS/PBCH-Block, der ersten Direktzugriffsressource entsprechen, von den Direktzugriffskonfigurationsparametern unterscheiden, die dem SS/PBCH-Block der zweiten Direktzugriffsressource entsprechen.

2. Verfahren nach Anspruch 1, wobei sich eine oder mehrere aus einer Zeitbereichsressource, einer Frequenzbereichsressource und einer Direktzugriffspräambel einer Direktzugriffsressource der ersten Direktzugriffsressource von der Zeitbereichsressource, der Frequenzbereichsressource und der Direktzugriffspräambel einer Direktzugriffsressource der zweiten Direktzugriffsressource unterscheiden.

3. Verfahren nach Anspruch 2, wobei die Zeitbereichsressource der ersten Direktzugriffsressource mit der Zeitbereichsressource der zweiten Direktzugriffsressource übereinstimmt und die Frequenzbereichsressource der ersten Direktzugriffsressource mit der Frequenzbereichsressource der zweiten Direktzugriffsressource übereinstimmt.

4. Verfahren nach Anspruch 1, wobei sich die Direktzugriffskonfigurationsparameter, die einem SS/PBCH-Block der ersten Direktzugriffsressource entsprechen, von den Direktzugriffskonfigurationsparametern unterscheiden, die dem SS/PBCH-Block der zweiten Direktzugriffsressource entsprechen, umfassend:
eine Direktzugriffskanal- RACH-Occasion, die dem SS/PBCH-Block der ersten Direktzugriffsressource entspricht, ist identisch mit der RACH-Occasion, die dem SS/PBCH-Block der zweiten Direktzugriffsressource entspricht, und
eine konfliktbasierte Präambel, die vom SS/PBCH-Block der ersten Direktzugriffsressource verwendet wird, unterscheidet sich von der konfliktbasierten Präambel, die vom SS/PBCH-Block der zweiten Direktzugriffsressource verwendet wird.

5. Verfahren nach Anspruch 1, wobei sich die Direktzugriffskonfigurationsparameter, die einem SS/PBCH-Block der ersten Direktzugriffsressource entsprechen, von den Direktzugriffskonfigurationsparametern unterscheiden, die dem SS/PBCH-Block der zweiten Direktzugriffsressource entsprechen, umfassend:
eine RACH-Occasion, die dem SS/PBCH-Block der ersten Direktzugriffsressource entspricht, unterscheidet sich von der RACH-Occasion, die dem SS/PBCH-Block der zweiten Direktzugriffsressource entspricht, und
eine konfliktbasierte Präambel, die vom SS/PBCH-Block der ersten Direktzugriffsressource verwendet wird, unterscheidet sich von der konfliktbasierten Präambel, die vom SS/PBCH-Block der zweiten Direktzugriffsressource verwendet wird.

6. Verfahren nach Anspruch 2, wobei sich die Zeitbereichsressource der ersten Direktzugriffsressource von der Zeitbereichsressource der zweiten Direktzugriffsressource unterscheidet, sich die Frequenzbereichsressource der ersten Direktzugriffsressource von der Frequenzbereichsressource der zweiten Direktzugriffsressource unterscheidet und sich die Direktzugriffspräambel der ersten Direktzugriffsressource von der Direktzugriffspräambel der zweiten Direktzugriffsressource unterscheidet.

7. Verfahren nach einem der Ansprüche 1 bis 6, wobei die erste Direktzugriffsressource einem ersten Informationselement entspricht, die zweite Direktzugriffsressource einem zweiten Informationselement entspricht und sich das erste Informationselement vom zweiten Informationselement unterscheidet.

8. Vorrichtung zur Konfiguration von Direktzugriffsressourcen, aufweisend:
einen Prozessor (220);
einen Speicher (204), der dazu ausgebildet ist, von dem Prozessor (220) ausführbare Anweisungen zu speichern;
wobei der Prozessor (220) dazu ausgebildet ist, das Verfahren zur Konfiguration der Direktzugriffsressourcen nach einem der Ansprüche 1 bis 7 auszuführen.

9. Nichtflüchtiges, computerlesbares Speichermedium, wobei eine in dem Speichermedium gespeicherte Anweisung von einem Prozessor ausgeführt wird, wobei der Prozessor das Verfahren zur Konfiguration von Direktzugriffsressourcen nach einem der Ansprüche 1 bis 7 ausführt.

## Revendications

1. Procédé de configuration de ressources d'accès aléatoire, mis en œuvre par un dispositif de réseau, comprenant les étapes consistant à :
configurer (S11) une première ressource d'accès aléatoire destinée à un terminal de premier type, et configurer une seconde ressource d'accès aléatoire destinée à un terminal de second type ; et
envoyer la première ressource d'accès aléatoire et la seconde ressource d'accès aléatoire au terminal de premier type et au terminal de second type ;
dans lequel les paramètres d'au moins une partie de paramètres de la première ressource d'accès aléatoire sont différents de paramètres de la seconde ressource d'accès aléatoire ;
**caractérisé en ce que** :
des paramètres de configuration d'accès aléatoire correspondant à un bloc de signal de synchronisation/canal physique de diffusion, dit bloc de SS/PBCH, de la première ressource d'accès aléatoire sont différents des paramètres de configuration d'accès aléatoire correspondant au bloc de SS/PBCH de la seconde ressource d'accès aléatoire.

2. Procédé selon la revendication 1, dans lequel un ou plusieurs d'une ressource de domaine temporel, d'une ressource de domaine fréquentiel et d'un préambule d'accès aléatoire d'une ressource d'accès aléatoire de la première ressource d'accès aléatoire sont différents de la ressource de domaine temporel, de la ressource de domaine fréquentiel et du préambule d'accès aléatoire d'une ressource d'accès aléatoire de la seconde ressource d'accès aléatoire.

3. Procédé selon la revendication 2, dans lequel la ressource de domaine temporel de la première ressource d'accès aléatoire est la même que la ressource de domaine temporel de la seconde ressource d'accès aléatoire, et la ressource de domaine fréquentiel de la première ressource d'accès aléatoire est la même que la ressource de domaine fréquentiel de la seconde ressource d'accès aléatoire.

4. Procédé selon la revendication 1, dans lequel des paramètres de configuration d'accès aléatoire correspondant à un bloc de SS/PBCH de la première ressource d'accès aléatoire qui sont différents des paramètres de configuration d'accès aléatoire correspondant au bloc de SS/PBCH de la seconde ressource d'accès aléatoire comprennent :
une occasion de canal d'accès aléatoire, dit RACH, correspondant au bloc de SS/PBCH de la première ressource d'accès aléatoire qui est la même que l'occasion de RACH correspondant au bloc de SS/PBCH de la seconde ressource d'accès aléatoire, et
un préambule à base de contention utilisé par le bloc de SS/PBCH de la première ressource d'accès aléatoire qui est différent du préambule à base de contention utilisé par le bloc de SS/PBCH de la seconde ressource d'accès aléatoire.

5. Procédé selon la revendication 1, dans lequel des paramètres de configuration d'accès aléatoire correspondant à un bloc de SS/PBCH de la première ressource d'accès aléatoire qui sont différents des paramètres de configuration d'accès aléatoire correspondant au bloc de SS/PBCH de la seconde ressource d'accès aléatoire comprennent :
une occasion de RACH correspondant au bloc de SS/PBCH de la première ressource d'accès aléatoire qui est différente de l'occasion de RACH correspondant au bloc de SS/PBCH de la seconde ressource d'accès aléatoire, et
un préambule à base de contention utilisé par le bloc de SS/PBCH de la première ressource d'accès aléatoire qui est différent du préambule à base de contention utilisé par le bloc de SS/PBCH de la seconde ressource d'accès aléatoire.

6. Procédé selon la revendication 2, dans lequel la ressource de domaine temporel de la première ressource d'accès aléatoire est différente de la ressource de domaine temporel de la seconde ressource d'accès aléatoire, la ressource de domaine fréquentiel de la première ressource d'accès aléatoire est différente de la ressource de domaine fréquentiel de la seconde ressource d'accès aléatoire, et le préambule d'accès aléatoire de la première ressource d'accès aléatoire est différent du préambule d'accès aléatoire de la seconde ressource d'accès aléatoire.

7. Procédé selon l'une quelconque des revendications 1 à 6, dans lequel la première ressource d'accès aléatoire correspond à un premier élément d'information, la seconde ressource d'accès aléatoire correspond à un second élément d'information, et le premier élément d'information est différent du second élément d'information.

8. Appareil de configuration de ressources d'accès aléatoire, comprenant :
un processeur (220) ;
une mémoire (204) configurée pour maintenir des instructions exécutables par le processeur (220) ;
dans lequel le processeur (220) est configuré pour exécuter le procédé de configuration de ressources d'accès aléatoire selon l'une quelconque des revendications 1 à 7.

9. Support de stockage non transitoire lisible par ordinateur, dans lequel, lorsqu'une instruction maintenue dans le support de stockage est exécutée par un processeur, le processeur exécute le procédé de configuration de ressources d'accès aléatoire selon l'une quelconque des revendications 1 à 7.
